# EUROPEAN PATENT APPLICATION

(11) **EP 2 179 891 A1**
(43) Date of publication of application: **28.04.2010**
(21) Application number: 09380170.2
(22) Date of filing: 21.10.2009
(51) Int. Cl.: B60Q 1/26, G02B 6/00

(54) **Signaling system for motor vehicles**

(30) Priority: 24.10.2008 ES 200803025
(71) Applicant: Seat, S.A., 08760 Martorell, Barcelona (ES)
(72) Inventor: Carrascosa Rodríguez, Alberto, 08760- Martorell Barcelona (ES)
(74) Representative: Carvajal y Urquijo, Isabel

(57) **Abstract**

Signaling system for motor vehicles, comprising a lighting base (4) of the area to be signaled and a lighting source (5) made up of LEDs. The lighting base comprises a layer of transparent plastic material, having on one of its surfaces a plurality of small milled cuttings (6) which are deep enough to intercept the light beams which, coming from the lighting source (5), go through the lighting base (4).

## Description

### Field of the invention

The present invention refers to a signaling system for motor vehicles, which can serve as signaling means of certain areas of the vehicle of frequent access or which are to be highlighted and it can also serve as indicator light, for example for optical indicators, such as blinkers, third brake light, position light, etc.

### Background of the invention

Both for signaling of certain areas of the vehicle and for optical indicators, there are direct lighting systems, from different kinds of lighting sources, such as incandescent light bulbs, LEDs, etc.

These direct lighting systems, however, do not enable to achieve a good signaling effect, when it is desired to highlight or signal a complete area, for example with a curved or complex surface.

### Description of the invention

The object of the present invention is to provide a signaling system which enables to intensely highlight the entire surface to be signaled, through indirect lighting of said area.

The signaling system of the invention is based on the refraction produced by a light beam circulating inside a layer of transparent plastic material, between opposite edges of said layer, due to milled cuttings left on one of said layer surfaces and which intercept the light beam.

According to the invention, the signaling system comprises a lighting base of the area to be signaled and a lighting source made up of LEDs.

The lighting base comprises a layer of transparent plastic material, having on one of its surfaces a plurality of small milled cuttings. The layer of plastic material can be made of impurity-free polymethyl methacrylate.

The LEDs which constitute the lighting source face one of the edges of the plastic material, with the light beams directed towards the opposite edge of said layer, so that the light goes through the layer of plastic material, from one side thereof to the other. The aforementioned cuttings will be made on one of the surfaces of the layer of plastic material and they will be deep enough to intercept the light beams and cause their refraction, so that they go to the outside of the plastic material layer, causing its lighting.

Preferably, the aforementioned milled cuttings will be made on the rear surface of the plastic material layer, in order to prevent dust, water, etc. from entering said cuttings.

The milled cuttings will be distributed in such a way that the desired signaling is achieved.

The plastic material layer can define the area to be signaled or it can cover the area to be signaled, either on the outside or on the inside, and in this latter case the area to be signaled will be transparent.

The system of the invention, as it has been indicated, can be applied as signaling means for certain areas requiring frequent access, in order to facilitate the user with exact information about the situation.

The invention can also be applied as a lighting means of optical indicators, such as blinkers, to lighten manufacturers' acronyms or trademarks, in order to highlight their drawing, etc. Besides, the signaling system of the invention also allows combinations with different colors, from different color LEDs.

### Brief description of the drawings

In the attached drawings, there is a non-limiting example of a possible application of the signaling system of the invention, specifically for the signaling of the recess of the rear door lock casing of a vehicle, which enables access to the opening handle of the rear door of the vehicle, where:
Figure 1 is a perspective view of the rear door lock casing and of the inner coating of a vehicle, with the recess which provides access to the opening handle of the rear door having a traditional configuration.
Figure 2 is a perspective view similar to figure 1, including the aforementioned recess the lighting system of the invention.
Figure 3 is a partial sectional view of the recess of the rear door lock casing, with the lighting system of the invention, taken according to the III-III cutting line, at a larger scale.
Figure 4 is a sectional view similar to figure 3, with the cuttings on the front surface of the recess.
Figure 5 is a sectional view similar to figure 3, showing an embodiment variant.

### Detailed description of an embodiment

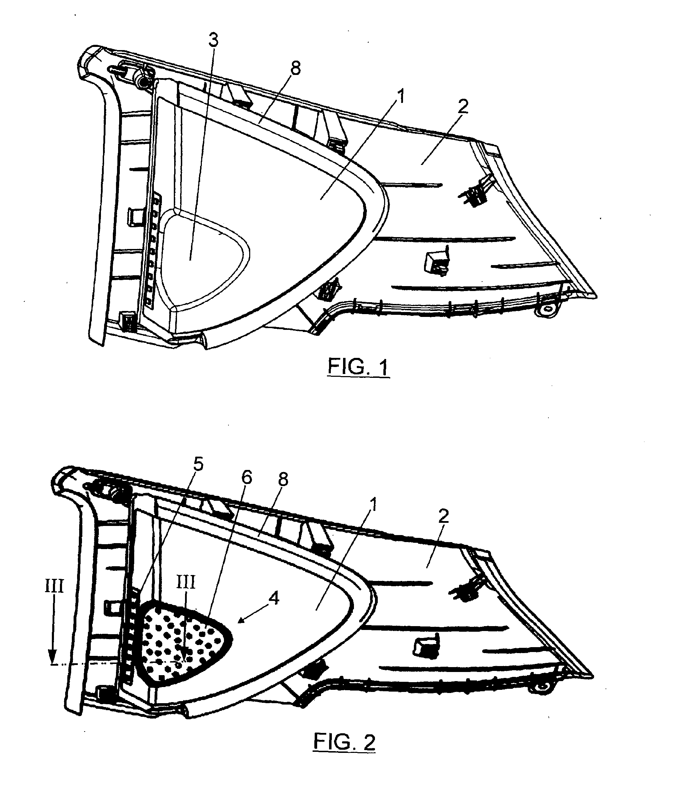

Figure 1 shows the rear door lock casing of a vehicle, which is placed on the inner coating of the rear door lock casing, which is traditionally fixed to the strut.

The rear door lock casing 1 includes a recess 3 which provides access to the handle to open the rear door, as described in the utility model No. 200300741 of the same applicants.

The signaling system of the invention can be applied as means of information to facilitate users the location of the access area to the handle for opening the rear doors of the vehicle, being this an application presented as a non-limiting example, since the system of the invention can be used as signaling means of other areas, and also as lighting means of the vehicle optical indicators.

In the example shown in figure 1 the surface of the recess 3 will constitute the area to be illuminated.

As shown in figure 2, the system of the invention comprises a lighting base 4 of the area 3 to be signaled and a lighting source 5 made up of LEDs.

The lighting base comprises a layer of transparent plastic material 41, which can define the area to be signaled 3, which has on one of its surfaces a plurality of small milled cuttings 6, which are millimetric, semicircular and which form the message which is to be transmitted.

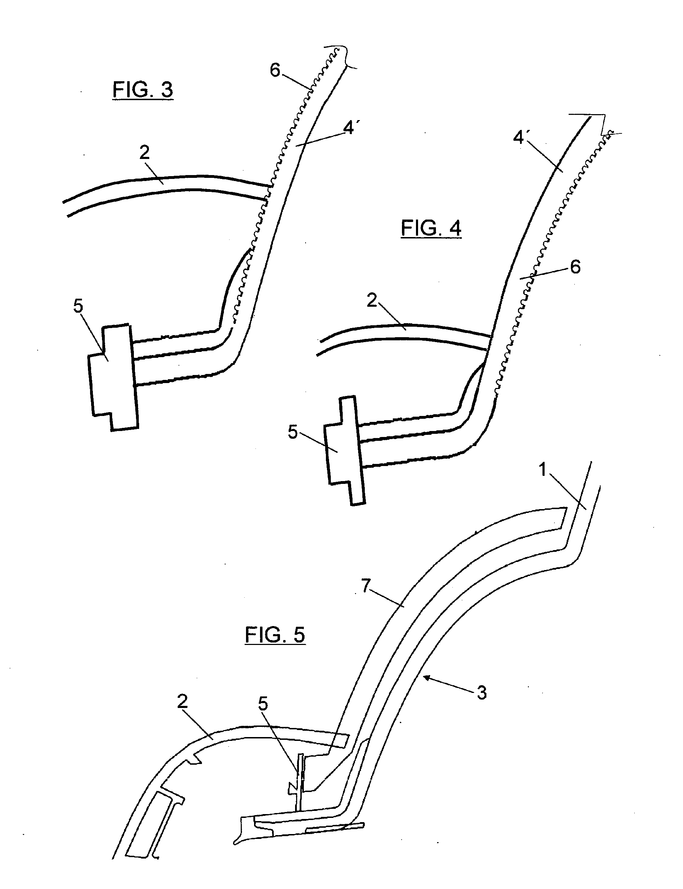

Preferably, the milled cuttings 6 will be made on the rear surface of the layer of plastic material 4', as shown in figure 3, although they can also be made on the front surface, figure 4, to prevent the dust and water from entering said cuttings.

The lighting source 5 comprises LEDs which face one of the edges of the plastic material layer 3, with the light beams directed towards the opposite edge, so that the light goes through the layer of plastic material, from one side thereof to the other. The milled cuttings 6 will be deep enough to intercept the light beams of the lighting source 5, at least partially, and cause their refraction through said cuttings, so that the visible surface of the plastic material layer 4' is illuminated. The lighting source 5 will include a converter layer with several LEDs, which can be of different colors, and which will be fixed on one of the edges of the plastic material layer. The usual electric current is transformed through this converter plate from analogical into digital and it turns into light beams in the LEDs. The light beams generated by said LEDs travel through the plastic material layer 4', which can be made of polymethyl methacrylate and must be free of impurities.

The embodiment described can be especially applied when the rear door lock casing 1 is made of a transparent plastic material, which enables to configure the depression or recess 3 facing the handle to open the vehicle rear door.

According to another embodiment, the plastic material layer constituting the lighting base consists of an additional part 7, figure 5, which will have on one of its surfaces the aforementioned milled cuttings 6, and on one of its edges the lighting source 5 is applied in the way already described. This plastic material plate 7 can be placed behind the recess 3 of the rear door lock casing 1, as long as said recess is transparent. If not, the layer 7 can be placed on the outer or visible surface of the recess 3.

Both in the embodiments of figures 3 and 4, and in that of figure 5, the light beams of the LEDs will illuminate the surface with the cuttings 6 and the edge thereof.

In the example described, the system of the invention comprises a polymethyl methacrylate plate constituting the rear door lock casing 1, with the depression or recess 3 with an engraving with multiple cuttings 6 on one of its surfaces, through where the light will be projected towards the outside, coming from a lighting source 5, thus being reflected the desired image. This hollow or recess 3 is what enables to access the handle for opening the rear door. The rear door lock casing 1 is fixed to the strut 2 through a rubber outline 8 and the LED plate constituting the lighting source 5 is fixed to an end of the rear door lock casing.

## Claims

1. Signaling system for motor vehicles, **characterized in that** it comprises a lighting base of the area to be signaled and a lighting source made up of LEDs; where said lighting base comprises a layer of transparent plastic material, having on one of its surfaces a plurality of small milled cuttings; and whose LEDs face one of the edges of the plastic material layer, with the light beams directed towards the opposite edge of said layer, and going through it, being the aforementioned cuttings deep enough to intercept the aforementioned light beams, at least partially, and cause their refraction and way out through them, being said cuttings distributed to reproduce a particular signaling.

2. System according to claim 1, **characterized in that** plastic material layer constitutes the area to be signaled.

3. System according to claim 1, **characterized in that** plastic material layer covers the area to be signaled.

4. System according to claim 1, **characterized in that** the area to be signaled is transparent and the plastic material layer is placed behind said area.

5. System according to the preceding claims, **characterized in that** the plastic material layer is made of polymethyl methacrylate.
